# EUROPEAN PATENT SPECIFICATION

(11) **EP 3 708 704 B1**
(45) Date of publication and mention of the grant of the patent: **26.07.2023**
(21) Application number: 19162459.2
(22) Date of filing: 13.03.2019
(51) Int. Cl.: D06B 19/00, D06B 23/20, D06B 9/06

(54) **METHOD AND INTEGRATED SYSTEM FOR SUPERCRITICAL, NON-AQUEOUS SOLVENT MEDIUM DYEING OF MULTIPLE FORMS OF SYNTHETIC, NATURAL AND BLENDED TEXTILES**
VERFAHREN UND INTEGRIERTES SYSTEM ZUM FÄRBEN VON VERSCHIEDENEN FORMEN SYNTHETISCHER, NATÜRLICHER UND GEMISCHTER TEXTILIEN MIT ÜBERKRITISCHEM, NICHTWÄSSRIGEM LÖSUNGSMITTEL
PROCÉDÉ ET SYSTÈME INTÉGRÉ POUR LA TEINTURE EN MILIEU SOLVANT NON-AQUEUX ET SURCRITIQUE DE FORMES MULTIPLES DE TEXTILES SYNTHÉTIQUES, NATURELS ET MIXTES

(43) Date of publication of application: 16.09.2020
(73) Proprietor: The Hong Kong Research Institute of Textiles and Apparel Limited, Kowloon, Hong Kong (CN)
(72) Inventor: KEH, Edwin Yee Man, Hong Kong (HK); YAO, Lei, Hong Kong (HK); CHAN, Alex Hok Chung, Hong Kong (HK); LEUNG, John Kin Ming, Hong Kong (HK); CHAN, Jason Lap Hung, Hong Kong (HK); YU, Wendy Lee Ying, Hong Kong (HK)
(74) Representative: Modiano, Gabriella Diana

(56) References cited:
- WO-A1-2005/071696
- CN-A- 107 904 986
- JP-A- 2002 129 464
- JP-A- 2003 082 572
- KR-B1- 100 570 333

## Description

### FIELD

The present disclosure generally relates to a method and an integrated system for dyeing synthetic, natural, and/or blended textiles in the form of fabrics, yarns, and garments. More particularly, the textile is dyed by non-aqueous solvent medium using supercritical carbon dioxide (Sc-CO₂) as a dyeing solvent.

### BACKGROUND

Polyesters such as polyethylene terephthalate (PET) and cotton are common clothing materials. Over 75% of all fabric used in the world are made from PET, cotton and PET/cotton blends. Traditional aqueous dyeing processes require large amounts of water. The wastewater from dyeing contains pollutants and results in water pollution. With widespread increasing environmental awareness, the textile industry is seeking more environmentally friendly alternatives for textile dyeing in order to tackle the enormous amount of wastewater produced every day around the world. One alternative is to use a non-aqueous solvent medium (NASM), in particular supercritical carbon dioxide (Sc-CO₂), in the dyeing process.

Sc-CO₂, which exists at conditions greater than the critical temperature of 304.25 K and the critical pressure of 74 bar, is a type of fluid having properties of both gas and liquid. It has advantages of gas such as low viscosity, high diffusivity and very low surface tension. At the same time, it has excellent solubility and can dissolve materials like liquid. In addition, dyeing textiles using Sc-CO₂ have other benefits, such as no extra dyeing auxiliaries required and the non-toxic nature of the Sc-CO₂. Thus, Sc-CO₂ could potentially replace water as dyeing solvent. Separating the unused dyestuff is relatively easy as compared to other aqueous dyeing methods. In contrast, the unused dyestuff in traditional water dyeing process is mixed with water and extra processing is necessary to recover the unused materials in dyeing. Therefore it is more difficult to achieve recycling of the chemicals.

Most of the other inventions related to Sc-CO₂ dyeing system are for laboratory or pilot studies, such as "RotaColor" from Chematur Engineering AB and the supercritical fluid dyeing pilot plant from Uhde High Pressure Technologies GmbH. The supercritical fluid dyeing pilot plant from Uhde High Pressure Technologies GmbH designed in 1999, for instance, can only dye 3-7 kg of PET yarn cones and reach up to 150°C and 30 mPa (300 bar). Few Sc-CO₂ dyeing systems are designed for commercial scale dyeing. DryCoo^{™}, owned by DyeCoo Textile Systems BV and Yeh Group in 2011, is the first Sc-CO₂ dyeing system for industrial production.

Conventional Sc-CO₂ dyeing systems are typically designed to only dye a single type of textile material, such as fiber, yarn, fabric or garment. An integrated dyeing system designed for multiple forms of textile has not been designed. Accordingly, there is a need for improved Sc-CO₂ dyeing systems that address at least some of the aforementioned needs. The document KR 100 570 333 B1 describes a supercritical CO₂, abbreviated Sc-CO₂, dyeing system for dyeing hydrophobic fibers, the system comprising: a first pressurizing pump for pressurizing liquefied CO₂ to Sc-CO₂; a heater for heating the Sc-CO₂; a dyestuff vessel for mixing a dyestuff and the Sc-CO₂ to obtain Sc-CO₂ -mixed dyestuff; a dyeing vessel for dyeing the textile by circulating the Sc-CO₂ -mixed dyestuff between the dyeing vessel and the dyestuff vessel; and a cyclone separator.

### SUMMARY

It is an object of the present disclosure to provide a method and an integrated system for dyeing synthetic, natural, and/or blended textiles, preferably by non-aqueous solvent medium using Sc-CO₂ as a dyeing solvent.

A system for dyeing multiple forms of textile according to the invention using liquefied CO₂ comprises (1) a first pressurizing pump for pressurizing liquefied CO₂ to supercritical CO₂ (Sc-CO₂); (2) a heater for heating the Sc-CO₂; (3) a dyestuff vessel for mixing a dyestuff and the Sc-CO₂ to obtain Sc-CO₂-mixed dyestuff; (4) a dyeing vessel for dyeing the textile by circulating the Sc CO₂ and the Sc-CO₂-mixed dyestuff between the dyeing vessel and the dyestuff vessel; and (5) one or more cyclone separators for removing the dyestuff from the Sc-CO₂-mixed dyestuff to obtain separated liquefied CO₂.

The system according to the invention further comprises a second pressurizing pump for pressurizing CO₂ to liquefied CO₂; and a liquefied CO₂ storage vessel for storing the liquefied CO₂ and the separated liquefied CO₂ from the one or more cyclone separators.

In accordance with a further aspect of the present disclosure, the system further comprises a third pressurizing pump for pressurizing an alcoholic solvent, wherein the alcoholic solvent is selected from the group consisting of methanol, ethanol, and a combination thereof; and the dyestuff is a reactive disperse dye.

In accordance with a further aspect of the present disclosure, the dyestuff vessel comprises a motor, a mesh basket, one or more stirrer blades, and a heating jacket.

In accordance with a further aspect of the present disclosure, the dyeing vessel for dyeing a fabric textile comprises a fabric beam, an inlet and an outlet for circulating the Sc-CO₂, and a heating jacket. The dyeing vessel for dyeing a garment textile comprises a garment basket, a garment vessel, a heating jacket, an inlet and an outlet for circulating the Sc-CO₂, and a motor. The dyeing vessel for dyeing a yarn textile comprises a yarn beam, a heating jacket, and an inlet and an outlet for circulating the Sc-CO₂.

The method for dyeing a textile according to the invention using liquefied CO₂ comprises (1) loading a textile to a dyeing vessel; (2) pressurizing and heating the liquefied CO₂ to obtain supercritical CO₂ (Sc-CO₂); (3) mixing a dyestuff and the Sc-CO₂ in a dyestuff vessel at a first temperature and a first pressure to obtain Sc-CO₂-mixed dyestuff; (4) circulating the Sc-CO₂-mixed dyestuff and the Sc CO ₂ between the dyeing vessel and the dyestuff vessel for a dyeing period to dye the textile; (5) rinsing the textile using Sc-CO₂ at a second temperature and the first pressure for a rinsing period; and (6) removing the dyestuff from the Sc-CO₂-mixed dyestuff by one or more cyclone separators and obtaining separated liquefied CO₂ and further pressurizing CO₂ to liquefied CO₂; storing the liquefied CO_{2;} and storing the separated liquefied CO₂ from the one or more cyclone separators.

In accordance with a further aspect of the present disclosure, the method further comprises purifying the separated liquefied CO₂ and transferring the separated liquefied CO₂ to a liquefied CO₂ storage vessel for recycling.

In accordance with a further aspect of the present disclosure, the circulating of the Sc-CO₂-mixed dyestuff and the Sc-CO₂ between the dyeing vessel and the dyestuff vessel is driven by a circulation pump operating in a single direction or in alternating directions.

In accordance with a further aspect of the present disclosure, the first temperature is in a range of 60°C to 150°C; the first pressure is in a range of 140 bar to 280 bar; the second temperature is in a range of 40°C to 80°C; the dyeing period is in a range of 30 minutes to 6 hours; and/or the rinsing period is in a range of 10 minutes and 2 hours.

In accordance with a further aspect of the present disclosure, the method further comprises (1) pressurizing an alcoholic solvent; (2) mixing the alcoholic solvent with the Sc-CO₂ before supplying the Sc-CO₂ to the dyestuff vessel and the dyeing vessel; and (3) removing the alcoholic solvent from the Sc-CO₂-mixed dyestuff by one or more cyclone separators. The alcoholic solvent is selected from the group consisting of methanol, ethanol, and a combination thereof. The dyestuff is a reactive disperse dye. The alcoholic solvent is present in a range of 3wt% to 12wt% with respect to the Sc-CO₂, or in a range of 0.1wt% to 5wt% with respect to the Sc-CO₂.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Other aspects of the present invention are disclosed as illustrated by the embodiments hereinafter.

### BRIEF DESCRIPTION OF THE DRAWINGS

The appended drawings, where like reference numerals refer to identical or functionally similar elements, contain figures of certain embodiments to further illustrate and clarify various aspects, advantages and features of the method and system for dyeing textile as disclosed herein. It will be appreciated that these drawings and graphs depict only certain embodiments of the invention and are not intended to limit its scope. The textile dyeing method and system as disclosed herein will be described and explained with additional specificity and detail through the use of the accompanying drawings in which:
FIG. 1 is a flowchart showing the major steps for dyeing PET, cotton, wool or PET/cotton blended textile using SC-C0₂ in accordance with certain embodiments of the present disclosure.
FIG. 2 is a flowchart showing the method for dyeing PET, cotton, wool or PET/cotton blended textile using SC-C0₂ in accordance with certain embodiments of the present disclosure.
FIG. 3 is a schematic diagram showing the structure of the system for dyeing PET, cotton, wool or PET/cotton blended textile using SC-C0₂ in accordance with certain embodiments of the present disclosure.
FIG. **4A** is a diagram showing the dyestuff vessel of the dyeing system.
FIG. **4B** is a structural schematic diagram showing the components of the dyestuff vessel of the dyeing system.
FIG. **5** is a structural schematic diagram showing the components of the fabric dyeing vessel of the dyeing system.
FIG. **6** is a structural schematic diagram showing the components of the garment dyeing vessel of the dyeing system.
FIG. **7** is a diagram illustrating the movement of the garment basket in the garment dyeing vessel of the dyeing system.
FIG. **8** is a structural schematic diagram showing the components of the yarn dyeing vessel of the dyeing system.
FIG. **9A** is a diagram illustrating a flow of Sc-CO₂ entering the yarn dyeing vessel in the process of dyeing.
FIG. **9B** is a diagram illustrating an alternative flow of Sc-CO₂ entering the yarn dyeing vessel in the process of dyeing.
FIG. **10** shows the color sample of the dyed textiles as described in Example 1.
FIG. **11** is a diagram showing the K/S curve of dyed textiles as described in Example 1.
FIG. **12** shows the dyed yarn cone as described in Example 2.
FIG. **13** shows the color sample of the dyed product as described in Example 3.
FIG. **14** shows the color sample of the dyed product as described in Example 4.
FIG. **15** shows the color sample of the dyed product as described in Example 5.

### DETAILED DESCRIPTION

The present disclosure generally relates to a method and a 2-in-1 dyeing system for dyeing synthetic, natural, and blended textiles using non-aqueous solvent medium (NASM). In particular, the present disclosure uses Sc-CO₂. The textile can be in the form of yarns, fabrics or garments.

In the following detailed description, the method, system and device are merely exemplary in nature and are not intended to limit the disclosure or its application and/or uses. It should be appreciated that a vast number of variations exist. The detailed description will enable those of ordinary skill in the art to implement an exemplary embodiment of the present disclosure without undue experimentation, and it is understood that various changes or modifications may be made in the function and arrangement of methods, systems and devices described in the exemplary embodiment without departing from the scope of the present disclosure as set forth in the appended claims. The exemplary embodiments may not be limited to the precise embodiments described below, and may be practiced without some of these specific details. In other instances, structures and methods have not been described in detail, if already well known.

According to the present disclosure, synthetic textiles include, but are not limited to, nylon, polyester, acrylic, and combinations thereof. Exemplary synthetic textiles include polyethylene terephthalate PET, polybutylene terephthalate (PBT), spandex, and polyethylene furanoate (PEF), and any mixtures thereof. In certain embodiments, the synthetic textile is PET.

Natural textiles include, but are not limited to, cotton, flax, linen, wool, cashmere, and silk. In certain embodiments, natural textiles can include semi-synthetics, such as viscose, modal, lyocell, rayon, and the like. In certain embodiments, the natural textile is cotton, wool, or a combination thereof.

Blended textiles can comprises one of more textiles or fibers selected from synthetic textiles or fibers, natural textiles or fibers, and semi-synthetic textiles or fibers. Exemplary blended textiles include, but are not limited to, PET/cotton, wool/PET, nylon/PET, cotton/spandex. In certain embodiments, the blended textile is PET/cotton.

Dyestuff refers to a colored chemical substance that can be used to dye a textile due to the affinity and/or reactivity of the colored substance to the substrate of the textile. Dyestuff may be a disperse dye of any color, a reactive disperse dye of any color, or a mixture of any disperse dye and/or reactive disperse dye, wherein the term "reactive disperse" refers to the capability of reacting with components of the natural textile or blended textile.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted.

Furthermore, as used herein, the term "approximately", when used in conjunction with a numerical value or range of values, refers preferably to a range that is within 10 percent, within 5 percent, or within 1 percent of a value with which the term is associated. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Similar to aqueous dyeing, the choice of dyestuff in the dyeing system mainly relies on the solubility of the dye in Sc-CO₂ and the reaction of the dye and the properties of the textile to be dyed. For example, the dyestuff used for dyeing PET may be disperse red, disperse yellow, or a mixture thereof. The dyestuff used for dyeing cotton and wool may be reactive disperse red, reactive disperse yellow, or a mixture thereof. The dyestuff used for dyeing PET/cotton blended may be reactive disperse red, reactive disperse yellow, a mixture of reactive disperse red and disperse red, or a mixture of reactive disperse yellow and disperse yellow.

The quantity of dyestuff added to the system, together with other conditions, can depend on the weight of the textile that is planned to be dyed and the solubility of the dyestuff used in Sc-CO₂. In general, the amount of dyestuff added is >0.1% of overall weight fraction (owf) of the textile and ≤10% owf, and preferably between 0% owf and 4% owf. Adding a higher concentration of dyestuff gives the dyed product a greater color strength value as well as a higher absorption (K) to scattering (S) ratio (K/S value). High purity dyes, preferably >95%, is proposed to use for dyeing in the system such that the change of color, the decomposition of dyestuff and the contamination of dyeing process are limited.

The mechanism behind the dyeing process for PET is summarized as follows. PET can undergo swelling at high temperature and high pressure condition. The swollen PET provides more space for Sc-CO₂ together with dissolved disperse dyestuff to penetrate inside the fiber of the textile. The retained dyestuff thus is fixed inside the fiber and the textile is dyed in color during cooling. The unfixed dyestuff on the surface is then washed out using Sc-CO₂ during rinsing stage, which is performed at condition with lower dyestuff solubility compared to dyeing condition.

For the dyeing of natural fibers like cotton and wool, reactive disperse dye can be used. Reactive disperse dye can react with the hydroxyl functional groups (-OH) of cotton and amine functional groups (-NH₂) of wool in the presence of alcoholic solvent, under high temperature and high pressure conditions. The alcoholic solvent can be any alcoholic solvent known in the art. In certain embodiments, the alcoholic solvent is methanol, ethanol, or a combination thereof. The purity of the alcoholic solvent can be >70%, particularly >99%. The amount of alcoholic solvent added to the dyeing vessel by pump depends on the weight of Sc-CO₂, preferably between 0.1wt% and 12wt%. Similar to the method for dyeing PET as described herein, the unbounded reactive disperse dye can then be rinsed off from the treated natural textiles using Sc-CO₂ at lower temperature while the pressure remains the same as the dyeing pressure. In addition, the process flow for dyeing PET/cotton blend can be the same as the dyeing process for cotton and wool.

The selection of the optimal temperature and pressure in the dyeing process typically depends on the solubility of the dye used. In general, disperse dyes have higher solubility at high temperature and pressure. Consequently, PET dyeing in the system is typically conducted at in high temperature and pressure, in particular between 90°C to 150°C and 140 bar to 280 bar. Reactive disperse dye typically call for a temperature of between 60°C to 120°C and a pressure of 140 bar to 280 bar.

The present disclosure aims to provide an improved method for dyeing textiles, such as garment, fabric, and yarn, in a green and sustainable manner without the use of water.

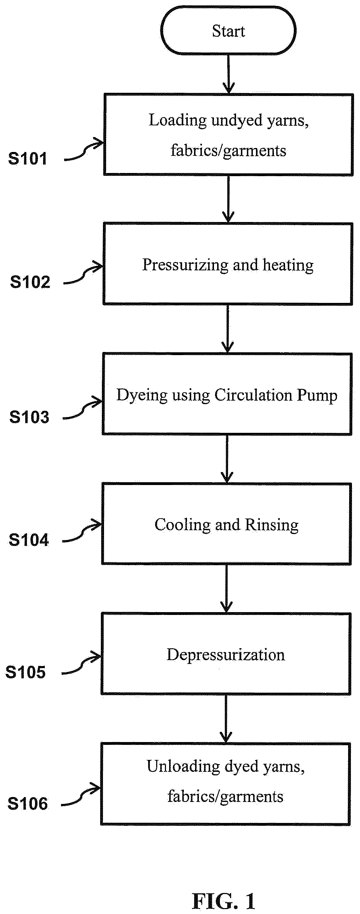

FIG. **1** is a flowchart showing the major steps for NASM dyeing PET, cotton, wool or PET/cotton blended textile in accordance with the present disclosure. The method comprises the steps: (1) loading undyed yarns, fabrics, and/or garments **S101**; (2) pressurizing and heating **S102**; (3) dyeing using circulation pump **S103**; (4) cooling and rinsing **S104**; (5) depressurizing **S105**; and (6) unloading dyed yarns, fabrics, and garments **S106**.

After loading undyed yarns, fabrics, and/or garments **S101** to the dyeing vessel **303**, pressurizing and heating **S102** are performed on the dyestuff vessel **302** for preparing the appropriate dyeing condition. The temperature and pressure conditions vary depending on the type of material for being dyed. The dyestuff vessel **302** includes a removable stainless steel mesh basket for dyestuff. After pressurizing and heating **S102** the dyestuff vessel **302** to the dyeing condition of 140 bar to 280 bar and 60°C to 150°C, the dyeing system **300** is ready to perform dyeing using circulation pump **S103**. A motor driven stirrer is turned on for internal circulation inside the dyeing vessel **302** so that Sc-CO₂ dissolves the dyestuff contained in the mesh basket, and the Sc-CO₂-mixed dyestuff **211** can enter the dyeing vessel **303** for dyeing using circulation pump **S103**.

In the cooling and rinsing **S104** step, a lower temperature of 40°C to 80°C is used, whereas the pressure is maintained the same as the pressure used in the dyeing stage at 140 bar to 280 bar. The rinsing process comprises continuous supply of fresh Sc-CO₂ for a rinsing period of approximately 10 minutes to 2 hours, particularly between 15 minutes to 1 hour, depending on the amount of unfixed dyestuff and/or Sc-CO₂ soluble impurities or side products remaining on the textiles.

After rinsing, the Sc-CO₂ is turned into liquefied CO₂ by performing depressurization **S105**, such that the dyestuff and any solvents (e.g., an alcoholic solvent) used are separated during the phase change of CO₂. The dyestuff and any solvents collected can be reused in the dyeing process. The dyed yarns, fabrics, and/or garments can be unloaded **S106**.

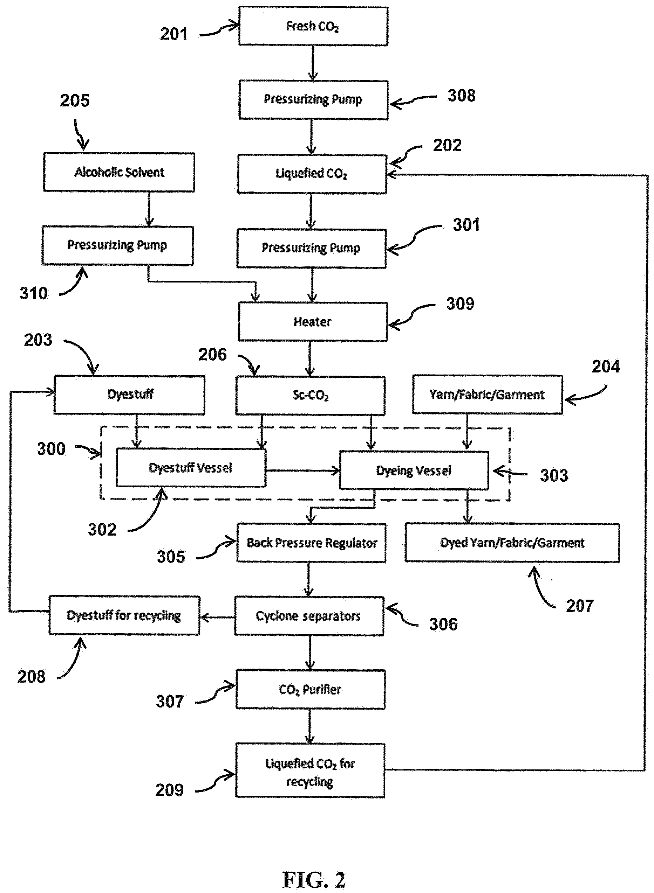

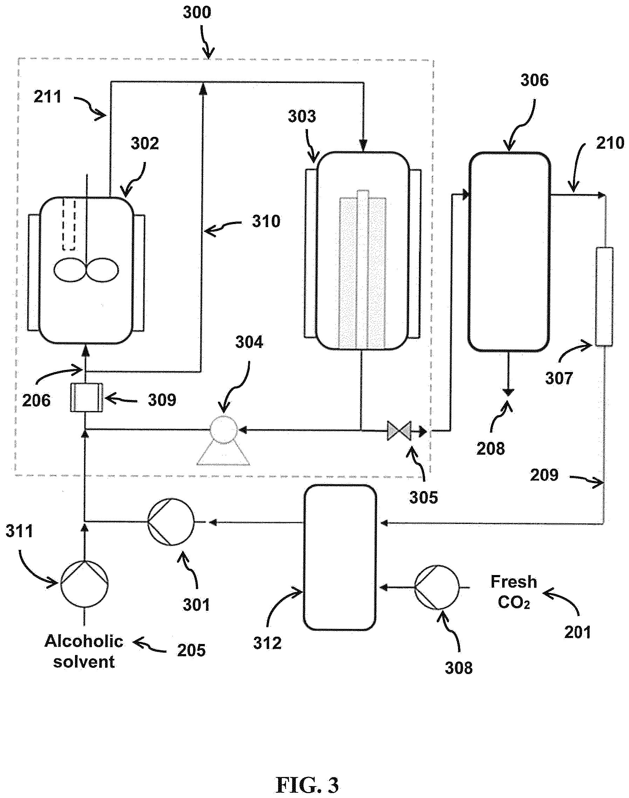

Now referring to FIGS. **2** and **3**, FIG. **2** is a flowchart showing the method for NASM dyeing PET, cotton, wool or PET/cotton blended textile using Sc-CO₂, while FIG. 3 is a schematic diagram showing the corresponding structure. The dyeing system **300** is a 2-in-1 dyeing system comprising a dyestuff vessel **302** and a dyeing vessel **303**, and uses fresh CO₂ **201** or recycled liquefied CO₂ **209** for dyeing synthetic, natural, and/or blended textiles.

The fresh CO₂ **201** is pressurized by a pressurizing pump **308** to obtain liquefied CO₂ **202**. In certain embodiments, the fresh CO₂ **201** is pressurized to approximately 20 bar to 150 bar. The liquefied CO₂ **202**, mixed with any recycled liquefied CO₂ **209**, is stored in a liquefied CO₂ storage vessel **312** at a temperature preferably between -20°C to 20°C. The liquefied CO₂ **202**, **209** is then transferred to another pressurizing pump **301** for further pressurization. The preferred pressure for obtaining Sc-CO₂ **206** for the purpose of the present disclosure is between 140 bar to 280 bar. For dyeing cotton, wool, or PET/cotton blended textile, the further pressurized liquefied CO₂ is mixed with alcoholic solvent **205**, for example, methanol or ethanol, which is also pressurized by a pressurizing pump **311**. After mixing, there is approximately 0.1 to 12 weight percent (wt%) of alcoholic solvent **205**, with respect to the weight of the Sc-CO₂, and preferably between 0.1 to 5 wt% of alcoholic solvent **205**. For dyeing PET textile, no alcoholic solvent **205** is mixed with the pressurized liquefied CO₂. As the preferred temperature of the Sc-CO₂ **206** for dyeing PET is between 90°C to 150°C, and the preferred temperature of the Sc-CO₂ **206** for dyeing natural textiles or blended textiles is between 60°C to 120°C, the pressurized liquefied CO₂ is heated to the preferred temperature by a heater **309**. The heater **309** can be, for example, a steam heat exchanger, a water heat exchanger, or an electrical heater. The obtained Sc-CO₂ **206** is used for both the dyestuff vessel **302** and dyeing vessel **303**. The Sc-CO₂ **206** is the dyeing solvent replacing water.

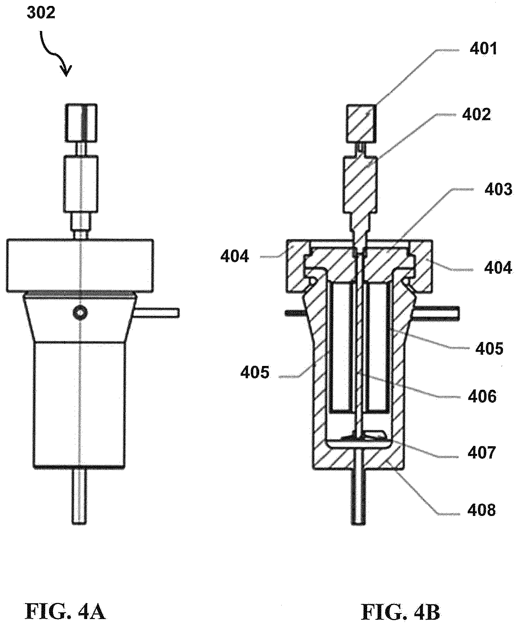

The dyestuff vessel **302** can be provided with a motor driven rotating stirrer, comprising a motor **401**, a mesh basket **405**, one or more stirrer blades **407**, and a heating jacket **408**. The dyestuff **203** and Sc-CO₂ **206** are mixed in the dyestuff vessel **302**. The choice of dyestuff **203** in the dyeing system **300** mainly relies on the solubility of the dyestuff **203** in Sc-CO₂ and the reaction of the dyestuff **203** and the nature of textile. An exemplary dyestuff vessel **302** is shown in FIG. **4A**, and FIG. **4B** illustrates the internal structure thereof. The amount of dyestuff is with respect to the weight of fabric.

The dyestuff **203** and Sc-CO₂ **206** are mixed by an internal circulation inside the dyeing vessel **302** driven by the rotational force of the one or more stirring blades **407** to obtain the Sc-CO₂-mixed dyestuff **211**. The stirring blades **407** are twisted and arranged to form preferably an axial flow impeller, or alternatively a radial flow impeller (hereinafter referred to as an "impeller"). The center of the impeller is connected longitudinally to a motor **401** along a stirrer axis **406**. The motor **401** is driven by a magnetic drive **402**. The motor **401** may employ other driving method for controlling the stirring blades **407** without departing from the spirit of the present disclosure. The impeller can generate a downward and then upward flow of the Sc-CO₂ **206** for mixing and dissolving the dyestuff **203** contained in the mesh basket **405**. As the mixing is operated at a pre-determined temperature, a heating jacket **408** is provided at the body of the dyestuff vessel **302**. On the top of the dyestuff vessel **302**, a cover **403** and a plurality of cover locks **404** are used for opening and hermetically sealing the dyestuff vessel **302**. It is preferred that the cover **403** and the mesh basket **405** are made of stainless steel.

The Sc-CO₂ **206** is also supplied to the dyeing vessel **303** through a bypass channel **310**, and the Sc-CO₂-mixed dyestuff **211** is also supplied to the dyeing vessel **303** for performing textile dyeing. The yarn/fabric/garment **204** is first loaded to the dyeing vessel **303**. Depending on the type of textile, there are three types of dyeing vessels **303** to be installed to the dyeing system **300**, including fabric dyeing vessel **303A** for dyeing fabrics, garment dyeing vessel **303B** for dyeing garments, and yarn dyeing vessel **303C** for dyeing yarns. In order to perform dyeing of textiles, a circulation pump **304** is used for continuously circulating the Sc-CO₂ **206** and the Sc-CO₂-mixed dyestuff **211** between the dyeing vessel **303** and the dyestuff vessel **302**. The circulation pump **304** is preferably an electrically powered centrifugal pump, which can thrust the Sc-CO₂ **206** and the Sc-CO₂-mixed dyestuff **211** into the heater **309** or the dyestuff vessel **302**. The circulation can be performed in either direction, and not necessarily to be operated in the direction as indicated in FIG. **3**. The circulation can also be in alternating directions by operating the circulation pump **304** in an alternating manner, i.e. clockwise, counterclockwise, clockwise, etc.

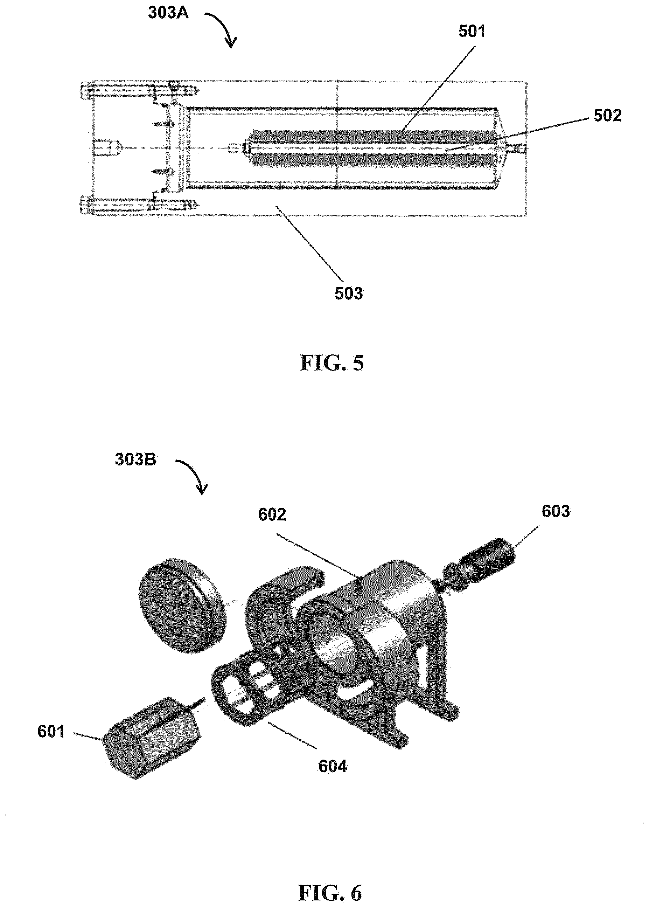

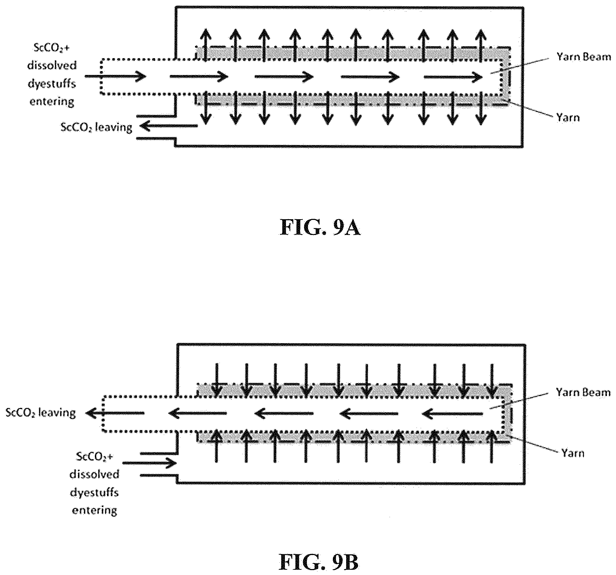

FIG. **5** illustrates a fabric dyeing vessel **303A** in accordance with certain embodiments of the present disclosure. The fabric dyeing vessel **303A** comprises a fabric beam **502**, an inlet and an outlet for circulating the Sc-CO₂, and an electrical heating jacket **503**. The heating jacket **503** is preferably an electrical heating jacket and applies heat to the fabric loaded into the fabric dyeing vessel **303A**, such that the dyeing operation can be performed at the preferred temperature range of 90°C to 150°C for PET, or 60°C to 120°C for cotton, wool or PET/cotton blend. As substantially surrounded by the heating jacket **503**, the dyeing process can be operated at the preferred temperature. The fabric beam **502** is used to tighten the fabrics at position **501** for dyeing. The weight of the fabrics is usually in a range from 10g to 40kg, particularly 100g to 20kg. The fabric beam **502** is a stainless steel cylindrical shell with holes for the flow of Sc-CO₂ and dyestuff. In the case of a forward flow, the Sc-CO₂-mixed dyestuff **211** is flowed from an inlet connecting on the wall to the fabric dyeing vessel **303A** to an outlet at the end of the fabric beam **502**, or vice versa, for a backward flow. A similar flow illustrating inlet and outlet of Sc-CO₂-mixed dyestuff **211** for the case of yarn dyeing vessel **303C** is shown in FIG. **9**, which can also be applied to the fabric dyeing vessel **303A** in FIG. **5**. Circulating the Sc-CO₂-mixed dyestuff **211** using either direction of flow or alternatively switching between the two directions is feasible in the dyeing system **300**.

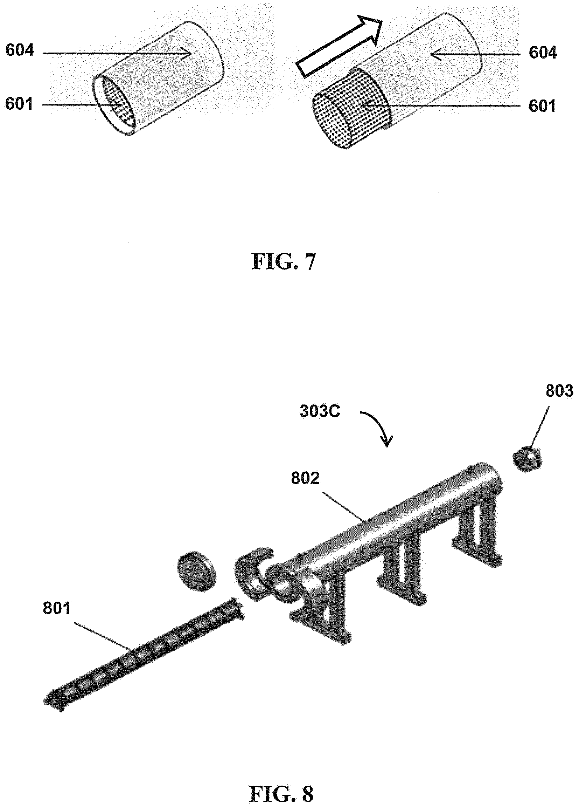

FIG. **6** illustrates a garment dyeing vessel **303B** in accordance with certain embodiments of the present disclosure. The garment dyeing vessel **303B** comprises a garment basket **601**, a garment vessel **604**, a heating jacket **602**, an inlet and an outlet for circulating the Sc-CO₂, and a motor **603**. The garment basket **601** is preferably in hexagonal shape, which is a movable stainless steel container. The weight of the garment is typically in a range of 100g to 5kg. The garment is dyed during rotary of the garment basket **601**. The garment is packed or hung inside the garment basket **601** for dyeing. The rotation is driven by the motor **603**. The heating jacket **602** is preferably an electrical heating jacket and applies heat to the garment loaded into the garment dyeing vessel **303B**, such that the dyeing operation can be performed at the preferred temperature range of 90°C to 150°C for PET, or 60°C to 120°C for cotton, wool or PET/cotton blend. Rotating the garment basket **601** in clockwise, anticlockwise or alternatively bidirectional manner is feasible in the dyeing system **300**. As shown in FIG. 7, the garment basket **601** is fixed inside the garment vessel **604** after loading the garment into the garment basket **601** for dyeing.

FIG. **8** illustrates a yarn dyeing vessel **303C** in accordance with certain embodiments of the present disclosure. The yarn dyeing vessel **303C** comprises a yarn beam **801**, a heating jacket **802**, and an inlet and an outlet for circulating the Sc-CO₂ **803**. The yarn beam **801** is a movable beam used for loading yarn cones. Typically, the yarn cones have a total weight in a range from 20g (1 yarn cone) to 40kg (10-20 yarn cones). Similar to the structure of the fabric dyeing vessel **303A**, the yarn beam **801** is a stainless steel cylindrical shell with holes for the flow of Sc-CO₂ and dyestuff. Yarn cones are dyed by forward flow, backward flow or alternative flow. FIG. **9** depicted two different flows of the Sc-CO₂ **206** and the Sc-CO₂-mixed dyestuff **211** in the yarn dyeing vessel **303C**. The inlet and the outlet are interchangeable. The heating jacket **802** is preferably an electrical heating jacket and applies heat to the garment loaded into the yarn dyeing vessel **303C**, such that the dyeing operation can be performed at the preferred temperature range of 90°C to 150°C for PET, or 60°C to 120°C for cotton, wool or PET/cotton blend.

The dyeing vessel **303** is preferred to be used for a specific type of textile. However, it shall be understood that the dyeing vessel **303** exhibits the potential for dyeing multiple types of textile. The dyeing system **300** of the present disclosure can advantageously dye the textile in a green, profitable, and sustainable manner without the use of water. After completing dyeing using circulation pump **S103**, the dyeing vessel **303** is cooled and the textile is rinsed accordingly.

For rinsing PET, a lower temperature, preferably between 70°C and 100°C, is used. The pressure is maintained the same as the pressure used in the dyeing stage at 140 bar to 280 bar. The unfixed dyestuff on the textile is then rinsed off by the flow of Sc-CO₂ **206**.

For rinsing cotton, wool and cotton/PET blend, a lower temperature, preferably between 40°C and 80°C, is used. The pressure is maintained the same as the pressure used in
the dyeing stage at 140 bar to 280 bar. The unfixed dyestuff and/or SC-C0₂ soluble impurities or side products on the textile is then rinsed off by the flow of SC-C02 206. After depressurization, the dyed yarn/fabric/garment 207 can be unloaded from the dyeing vessel 303.

The pressure in the dyeing system **300** can be maintained using a back pressure regulator **305**, which can allow a flow of the Sc-CO₂ **206** and the Sc-CO₂-mixed dyestuff **211** to the cyclone separators **306** when the pressure is higher than the expected range. The cyclone separators **306** can separate dyestuff and solvent from Sc-CO₂. A cyclone separator **306** is a separation device that can filter heavier substance from lighter substance. Other separation devices, such as a centrifuge, may also be used to replace the cyclone separators **306** for achieving the same purpose.

In the cyclone separators **306**, the temperature and pressure are usually lower than those in the dyeing vessel **303**. Due to difference of temperature and pressure, the Sc-CO₂ turns into liquefied CO₂. The dyestuff and solvents (for the case of cotton, wool, and cotton/PET blend) are separated during the phase change of Sc-CO₂ to CO₂. Preferably, at least two cyclone separators **306** are used to ensure that most of the dyestuff are separated and precipitated at the bottom of the cyclone separators **306**. The collected dyestuff and solvent **208** can be reused in the dyeing process. The two cyclone separators **306** are operated at relatively low temperature and low pressure, particularly at around 30°C to 80°C and 20 bar to 150 bar. Preferably, the first cyclone separator **306** is operated at around 50°C to 80°C and 70 bar to 150 bar, particularly 60°C to 80°C and 100 bar to 140 bar. The second cyclone separator **306** is operated at around 30°C to 50°C and 20 bar to 60 bar, particularly 30°C to 50°C and 20 bar to 50 bar. The two cyclone separators **306** are designed for separating dyestuff, alcoholic solvent and CO₂.

The separated CO₂ **210** from the cyclone separators **306** is then purified by CO₂ purifier **307** and recycled. The recycled CO₂ **209** is transferred and stored in liquefied CO₂ storage vessel **312** for recycling.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein.

While exemplary embodiments have been presented in the foregoing detailed description of the invention, it should be appreciated that a vast number of variations exist. It should further be appreciated that the exemplary embodiments are only examples, and are not intended to limit the scope, applicability, operation, or configuration of the invention in any way. Rather, the foregoing detailed description will provide those skilled in the art with a convenient road map for implementing an exemplary embodiment of the invention, it being understood that various changes may be made in the function and arrangement of steps and method of operation described in the exemplary embodiment without departing from the scope of the invention as set forth in the appended claims.

### Example 1:

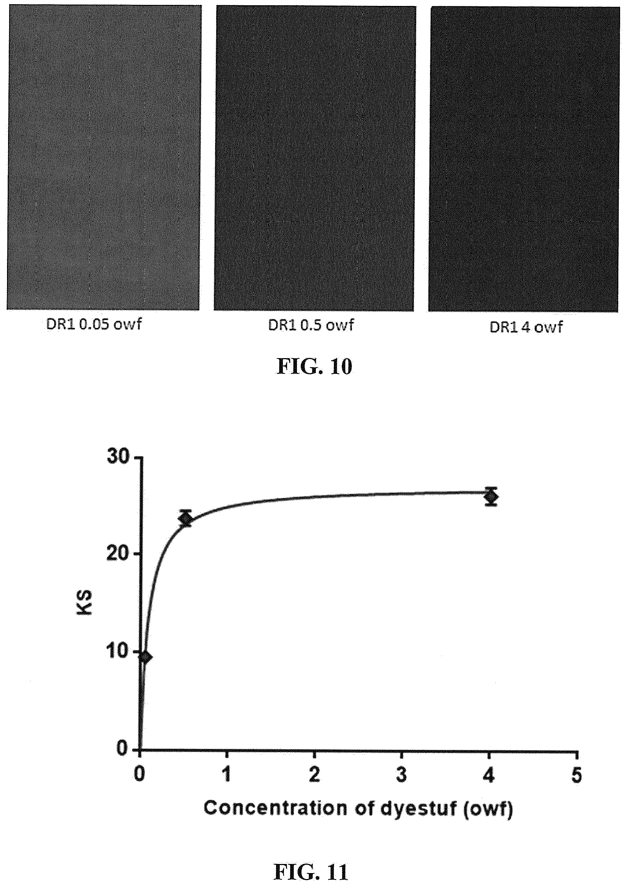

FIG. **10** shows the color sample of the dyed fabrics for Example 1. The images in FIG. **10**, although depicted in grayscale (not shown in color), are taken from a color version where the colors range from cardinal (hex=#AE1437) on the left to red (hex=#770311) in the middle and dark purple (hex=#360A0D) on the right side.

The textile sample used in Example 1 is a textile made of 98% PET/2% spandex fabric, which is dyed with a disperse red (DR1) by the process and system of the present disclosure. Three dyeing batches of different concentrations of DR1, 0.05%owf (on weight of fiber), 0.5%owf, and 4%owf, are added to the mesh basket **405** of the dyestuff vessel **302**. For each dyeing batch, 15kg of textile sample is fixed on the fabric beam **502**, and the fabric dyeing vessel **303A** is operated at 130°C and 260 bar with 3 hours of circulation using the circulation pump **304**. An alternating flow with an interval of 30 minutes is used, such that the Sc-CO₂ **206** enters the fabric dyeing vessel **303A** from two different directions. After dyeing, the fabric dyeing vessel **303A** is cooled to 65°C following with 30 minutes of rinsing to remove the unfixed dyestuff.

By carrying out physical tests, the performance of the dyeing process can be evaluated. FIG. **11** shows the relationship between the average K/S values and different concentrations of DR1 in Example 1. For the three textile samples (0.05%owf, 0.5%owf, and 4%owf), the average K/S values are 9.5 (±0.38), 23.8 (±0.77), and 26.2 (±0.85) respectively with λmax = 520 nm, measured by X-rite Ci7600 bench top spectrophotometer. The textile samples can also pass the other tests, such as color fastness to washing (AATCC61), color fastness to dry cleaning (AATCC132), color fastness to perspiration (AATCC15), color fastness to water (AATCC107), color fastness to crocking (AATCC8), color fastness to light (AATCC16), and tearing strength (ASTM D1424). The three textile samples score greater than 3 in color staining to cotton and polyester of AATCC61, AATCC 132, AATCC15 and AATCC107; and greater than 3.5 in AATCC8 and AATCC16.

### Example 2:

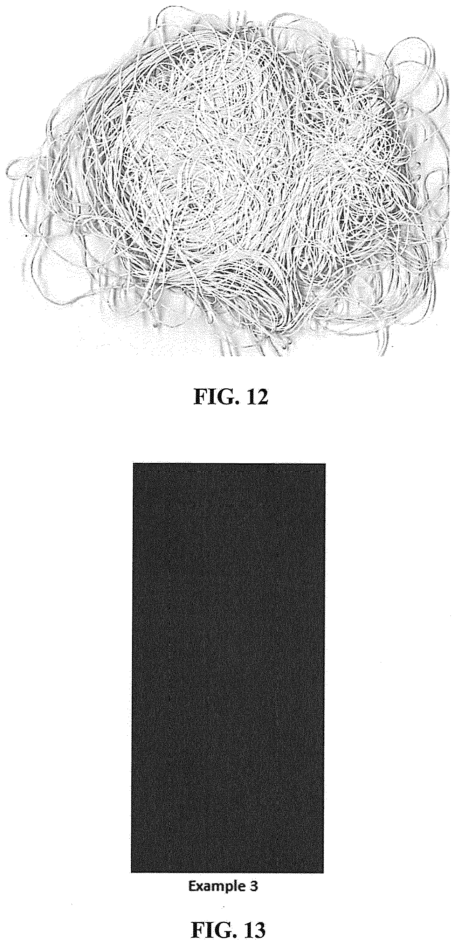

FIG. **12** shows the dyed yarn for Example 2. The photo in FIG. **12**, although depicted in grayscale (not shown in color), is light yellow in color with hex #feef19.

The textile sample used in Example 2 is a 100% PET yarn cone, which is dyed with a disperse yellow (DY1) using the dyeing method and system of the present disclosure. In the dyestuff vessel **302**, 0.5%owf DY1 is added to the mesh basket **405**. For the dyeing batch, 20kg of textile sample is put into the yarn beam **801**, and the yarn dyeing vessel **303C** is operated at 120°C and 240 bar with 3 hours of circulation using the circulation pump 304. An alternating flow with an interval of 60 minutes is used, such that the Sc-CO₂ **206** enters the yarn dyeing vessel **303C** from two different directions. After dyeing, the yarn dyeing vessel **303C** is cooled to 70°C following with 45 minutes of rinsing to remove the unfixed dyestuff.

By carrying out physical tests, the performance of the dyeing process can be evaluated. The average K/S value for the textile sample of Example 2 is 18.4 (±0.66) with λmax = 400 nm, measured by X-rite Ci7600 bench top spectrophotometer. The textile sample can also pass the other tests, such as AATCC61, AATCC132, AATCC15, AATCC107, AATCC8, AATCC16, and ASTM D1424. In AATCC61, AATCC 132, AATCC15 and AATCC107, the scores are greater than 4.5 in color staining to cotton and polyester, and greater than 4 in AATCC8 and AATCC16.

### Example 3:

FIG. **13** shows the color sample of the dyed garment for Example 3. The image in FIG. **13**, although depicted in grayscale (not shown in color), is navy blue in color with hex #043484.

The textile sample used in Example 3 is a 100% PET garment, which is dyed with a disperse blue (DB1) using the dyeing method and system of the present disclosure. In the dyestuff vessel **302**, 4%owf DB1 is added to the mesh basket **405**. For the dyeing batch, 1kg of textile sample is put into the garment basket **601**, and the garment dyeing vessel **303B** is operated at 130°C and 250 bar with 4 hours of circulation using the circulation pump **304**. An alternating flow with an interval of 45 minutes is used, such that the Sc-CO₂ **206** enters the garment dyeing vessel **303B** from two different directions. After dyeing, the garment dyeing vessel **303B** is cooled to 70°C following with 60 minutes of rinsing to remove the unfixed dyestuff.

By carrying out physical tests, the performance of the dyeing process can be evaluated. The average K/S value for the textile sample of Example 3 is 20.3 (±0.27) with λmax = 650 nm, measured by X-rite Ci7600 bench top spectrophotometer. The textile sample can also pass the other tests, such as AATCC61, AATCC132, AATCC15, AATCC107, AATCC8, AATCC16, and ASTM D1424. In AATCC61, AATCC 132, AATCC15 and AATCC107, the scores are greater than 4.5 in color staining to cotton and polyester, and greater than 3.5 in AATCC8 and AATCC16.

### Example 4:

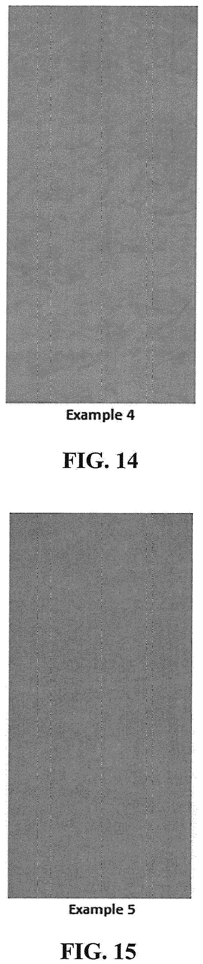

FIG. **14** shows the color sample of the dyed fabric for Example 4. The image in FIG. **14**, although depicted in grayscale (not shown in color), is pumpkin in color with hex #fa8322.

The textile sample used in Example 4 is a 100% cotton fabric, which is dyed with a reactive disperse yellow (RDY1) using the dyeing method and system of the present disclosure. In the dyestuff vessel **302**, 4%owf RDY1 is added to the mesh basket **405**. For the dyeing batch, 15kg of textile sample is put into the fabric beam **502**. Also, 3wt% of methanol with respective to the weight of Sc-CO₂ is added into the dyeing system **300** through a pressurizing pump **310**. The fabric dyeing vessel **303A** is operated at 90°C and 270 bar with 4 hours of circulation using the circulation pump **304**. An alternating flow with an interval of 60 minutes is used, such that the Sc-CO₂ **206** enters the fabric dyeing vessel **303A** from two different directions. After dyeing, the fabric dyeing vessel **303A** is cooled to 70°C following with 30 minutes of rinsing to remove the unfixed dyestuff.

By carrying out physical tests, the performance of the dyeing process can be evaluated. The average K/S value for the textile sample of Example 4 is 7.5 (±0.42) with λmax = 520 nm, measured by X-rite Ci7600 bench top spectrophotometer. The textile sample can also pass the other tests, such as AATCC61, AATCC132, AATCC15, AATCC107, AATCC8, AATCC16, and ASTM D1424. In AATCC61, AATCC 132, AATCC15 and AATCC107, the scores are greater than 4 in color staining to cotton and polyester, and greater than 3 in AATCC8 and AATCC16.

### Example 5:

FIG. **15** shows the color sample of the dyed fabric for Example 5. The image in FIG. **15**, although depicted in grayscale (not shown in color), is pumpkin in color with hex #e47727.

The textile sample used in Example 5 is a blend fabric of 50% PET and 50% cotton, which is dyed with a reactive disperse yellow (RDY1) using the dyeing method and system of the present disclosure. In the dyestuff vessel **302**, 4%owf RDY1 is added to the mesh basket **405**. For the dyeing batch, 15kg of textile sample is put into the fabric beam **502**. Also, 6wt% of methanol with respective to the weight of Sc-CO₂ is added into the dyeing system **300** through a pressurizing pump **310**. The fabric dyeing vessel **303A** is operated at 90°C and 280 bar with 4 hours of circulation using the circulation pump **304**. An alternating flow with an interval of 60 minutes is used, such that the Sc-CO₂ **206** enters the fabric dyeing vessel **303A** from two different directions. After dyeing, the fabric dyeing vessel **303A** is cooled to 70°C following with 60 minutes of rinsing to remove the unfixed dyestuff.

By carrying out physical tests, the performance of the dyeing process can be evaluated. The average K/S value for the textile sample of Example 4 is 8.0 (±0.48) with λmax = 470 nm, measured by X-rite Ci7600 bench top spectrophotometer. The textile sample can also pass the other tests, such as AATCC61, AATCC132, AATCC15, AATCC107, AATCC8, AATCC16, and ASTM D1424. In AATCC61, AATCC 132, AATCC15 and AATCC 107, the scores are greater than 4 in color staining to cotton and polyester, and greater than 3 in AATCC8 and AATCC 16.

## Claims

1. A system for dyeing multiple forms of textile using liquefied CO₂, the system comprising:
a first pressurizing pump (301) for pressurizing liquefied CO₂ (202) to supercritical CO₂, abbreviated Sc-CO₂ (206);
a heater (309) for heating the Sc-CO₂ (206);
a dyestuff vessel (302) for mixing a dyestuff (203) and the Sc-CO₂ (206) to obtain Sc-CO₂-mixed dyestuff (211);
a dyeing vessel (303) for dyeing the textile by circulating the Sc-CO₂ and the Sc-CO₂-mixed dyestuff (211) between the dyeing vessel (303) and the dyestuff vessel (302);
one or more cyclone separators (306) for removing the dyestuff (203) from the Sc-CO₂-mixed dyestuff (211) to obtain separated liquefied CO₂ (210) and
a second pressurizing pump (308) for pressurizing CO₂ (201) to liquefied CO₂ (202); and
a liquefied CO₂ storage vessel (312) for storing the liquefied CO₂ (202) and the separated liquefied CO₂ (210) from the one or more cyclone separators (306).

2. The system of claim 1 further comprising CO₂ (202), an alcoholic solvent (205) and dyestuff (203) and comprising a third pressurizing pump (311) for pressurizing an alcoholic solvent (205), wherein:
the alcoholic solvent (205) is selected from the group consisting of methanol, ethanol, and a combination thereof; and
the dyestuff (203) is a reactive disperse dye.

3. The system of claim 1, wherein the dyestuff vessel (302) comprises a motor (401), a mesh basket (405), one or more stirrer blades (407), and a heating jacket (408).

4. The system of claim 1, wherein the dyeing vessel (303A) for dyeing a fabric textile comprises a fabric beam (502), an inlet and an outlet for circulating the Sc-CO₂, and a heating jacket (503).

5. The system of claim 1, wherein the dyeing vessel (303B) for dyeing a garment textile comprises a garment basket (601), a garment vessel (604), a heating jacket (602), an inlet and an outlet for circulating the Sc-CO₂, and a motor (603).

6. The system of claim 1, wherein the dyeing vessel (303C) for dyeing a yarn textile comprises a yarn beam (801), a heating jacket (802), and an inlet and an outlet for circulating the Sc-CO₂ (803).

7. A method for dyeing a textile using liquefied CO₂, the method comprising the steps:
loading a textile to a dyeing vessel (303, S101);
pressurizing and heating liquefied CO₂ (202) to obtain supercritical CO₂ (206), abbreviated Sc-CO₂ (S102);
mixing a dyestuff (203) and the Sc-CO₂ (206) in a dyestuff vessel (302) at a first temperature and a first pressure to obtain Sc-CO₂-mixed dyestuff;
circulating the Sc-CO₂-mixed dyestuff (211) and the Sc-CO₂ (206) between the dyeing vessel (303) and the dyestuff vessel (302) for a dyeing period to dye the textile then rinsing the textile using Sc-CO₂ (206) at a second temperature and the first pressure for a rinsing period (S104), the second temperature being lower than the first temperature;
removing the dyestuff (203) from the Sc-CO₂-mixed dyestuff by one or more cyclone separators (306) and obtaining separated liquefied CO₂ (202);
pressurizing CO₂ (201) to liquefied CO₂ (202);
storing the liquefied CO₂ (202) in a liquefied CO₂ storage vessel (312) and
storing the separated liquefied CO₂ (210) from the one or
more cyclone separators (306) in said liquefied CO₂ storage vessel (312).

8. The method of claim 7
-S-- further comprising purifying the separated liquefied CO₂ (210) and transferring the separated liquefied CO₂ (210) to a liquefied CO₂ storage vessel (312) for recycling.

9. The method of claim 7, wherein the circulating of the Sc-CO₂-mixed dyestuff (211) and the Sc-CO₂ (206) between the dyeing vessel (303) and the dyestuff vessel (302) is driven by a circulation pump (103) operating in a single direction or in alternating directions.

10. The method of claim 7, wherein the first temperature is in a range of 60°C to 150°C.

11. The method of claim 7, wherein the first pressure is in a range of 140 bar to 280 bar.

12. The method of claim 7, wherein the second temperature is in a range of 40°C to 80°C.

13. The method of claim 7, wherein the dyeing period is in a range of 30 minutes to 6 hours.

14. The method of claim 7, wherein the rinsing period is in a range of 10 minutes and 2 hours.

15. The method of claim 7 further comprising:
pressurizing an alcoholic solvent (205);
mixing the alcoholic solvent (205) with the Sc-CO₂ (206) before supplying the Sc-CO₂ (206) to the dyestuff vessel (302) and the dyeing vessel (303); and
removing the alcoholic solvent (205) from the Sc-CO₂-mixed dyestuff (211) by one or more cyclone separators (306) .

16. The method of claim 15, wherein the alcoholic solvent (205) is selected from the group consisting of methanol, ethanol, and a combination thereof.

17. The method of claim 15, wherein the dyestuff (203) is a reactive disperse dye.

18. The method of claim 15, wherein the alcoholic solvent (205) is present in a range of 3wt% to 12wt% with respect to the Sc-CO₂.

19. The method of claim 15, wherein the alcoholic solvent (205) is present in a range of 0.1wt% to 5wt% with respect to the Sc-CO₂.

## Patentansprüche

1. Ein System zum Färben mehrerer Arten von Textilien mit Hilfe von verflüssigtem CO₂, wobei das System Folgendes umfasst:
eine erste Druckaufbaupumpe (301), um verflüssigtes CO₂ (202) unter Druck zu überkritischem CO₂, abgekürzt Sc-CO₂ (206), zu machen;
eine Heizvorrichtung (309) zum Erhitzen des Sc-CO₂ (206);
ein Farbstoffgefäß (302) zum Mischen eines Farbstoffs (203) und des Sc-CO₂ (206), um einen Sc-CO₂-gemischten Farbstoff (211) zu erhalten;
einen Färbekessel (303) zum Färben der Textilie durch Zirkulieren des Sc-CO₂ und des Sc-CO₂-gemischten Farbstoffs (211) zwischen dem Färbekessel (303) und dem Farbstoffgefäß (302);
einen oder mehrere Zyklonabscheider (306) zum Entfernen des Farbstoffs (203) von dem Sc-CO₂-gemischten Farbstoff (211), um abgetrenntes verflüssigtes CO₂ (210) zu erhalten; und
eine zweite Druckaufbaupumpe (308), um CO₂ (201) unter Druck zu verflüssigtem CO₂ (202) zu machen; und
einen Lagerbehälter (312) für verflüssigtes CO₂, um das verflüssigte CO₂ (202) und das abgetrennte verflüssigte CO₂ (210) aus dem einen oder den mehreren Zyklonabscheidern (306) zu lagern.

2. Das System gemäß Anspruch 1, das weiter CO₂ (202), ein alkoholisches Lösungsmittel (205) und Farbstoff (203) sowie eine dritte Druckaufbaupumpe (311), um ein alkoholisches Lösungsmittel (205) unter Druck zu setzen, umfasst, worin:
das alkoholische Lösungsmittel (205) gewählt ist aus der Gruppe bestehend aus Methanol, Ethanol und einer Kombination davon; und
der Farbstoff (203) ein dispergierter Reaktivfarbstoff ist.

3. Das System gemäß Anspruch 1, wobei das Farbstoffgefäß (302) einen Motor (401), einen Gitterkorb (405), ein oder mehrere Rührflügel (407) und einen Heizmantel (408) umfasst.

4. Das System gemäß Anspruch 1, wobei der Färbekessel (303A) zum Färben einer Textilie einen Textilstrahl (502), einen Einlass und einen Auslass zum Zirkulieren des Sc-CO₂ und einen Heizmantel (503) umfasst.

5. Das System gemäß Anspruch 1, wobei der Färbekessel (303B) zum Färben einer Bekleidungstextilie einen Kleidungskorb (601), ein Kleidungsgefäß (604), einen Heizmantel (602), einen Einlass und einen Auslass zum Zirkulieren des Sc-CO₂ und einen Motor (603) umfasst.

6. Das System gemäß Anspruch 1, wobei der Färbekessel (303C) zum Färben einer Garntextilie einen Garnstrahl (801), einen Heizmantel (802) und einen Einlass und einen Auslass zum Zirkulieren des Sc-CO₂ (803) umfasst.

7. Ein Verfahren zum Färben einer Textilie mit Hilfe von verflüssigtem CO₂, wobei das Verfahren folgende Schritte umfasst:
das Beladen eines Färbekessels (303, S101) mit einer Textilie;
das Unter-Druck-Setzen und Erhitzen von verflüssigtem CO₂ (202), um überkritisches CO₂ (206), abgekürzt Sc-CO₂ (S102), zu erhalten;
das Mischen eines Farbstoffs (203) und des Sc-CO₂ (206) in einem Färbekessel (302) bei einer ersten Temperatur und einem ersten Druck, um Sc-CO₂-gemischten Farbstoff zu erhalten;
das Zirkulieren des Sc-CO₂-gemischten Farbstoffs (211) und des Sc-CO₂ (206) zwischen dem Färbekessel (303) und dem Farbstoffgefäß (302) über einen Färbezeitraum, um die Textilie zu färben; anschließend das Spülen der Textilie mit Hilfe von Sc-CO₂ (206) bei einer zweiten Temperatur und dem ersten Druck über einen Spülzeitraum (S104), wobei die zweite Temperatur niedriger ist als die erste Temperatur;
das Entfernen des Farbstoffs (203) vom Sc-CO₂-gemischten Farbstoff durch einen oder mehrere Zyklonabscheider (306) und das Erhalten von abgetrenntem verflüssigtem CO₂ (202);
das Unter-Druck-Setzen von CO₂ (201), um verflüssigtes CO₂ (202) zu erhalten;
das Lagern des verflüssigten CO₂ (202) in einem Lagerbehälter (312) für verflüssigtes CO₂ und
das Lagern des abgetrennten verflüssigten CO₂ (210) von dem einen oder den mehreren Zyklonabscheidern (306) in dem Lagerbehälter (312) für verflüssigtes CO₂.

8. Das Verfahren gemäß Anspruch 7,
das weiter das Reinigen des abgetrennten verflüssigten CO₂ (210) und das Überführen des abgetrennten verflüssigten CO₂ (210) an einen Lagerbehälter (312) für verflüssigtes CO₂ zum Recycling umfasst.

9. Das Verfahren gemäß Anspruch 7,
wobei das Zirkulieren des Sc-CO₂-gemischten Farbstoffs (211) und des Sc-CO₂ (206) zwischen dem Färbekessel (303) und dem Farbstoffgefäß (302) von einer Umwälzpumpe (103) angetrieben wird, die in einer einzigen Richtung oder in alternierende Richtungen arbeitet.

10. Das Verfahren gemäß Anspruch 7,
wobei die erste Temperatur in einem Bereich von 60°C bis 150°C liegt.

11. Das Verfahren gemäß Anspruch 7,
wobei der erste Druck in einem Bereich von 140 bar bis 280 bar liegt.

12. Das Verfahren gemäß Anspruch 7,
wobei die zweite Temperatur in einem Bereich von 40°C bis 80°C liegt.

13. Das Verfahren gemäß Anspruch 7,
wobei der Färbezeitraum in einem Bereich von 30 Minuten bis 6 Stunden liegt.

14. Das Verfahren gemäß Anspruch 7,
wobei der Spülzeitraum in einem Bereich von 10 Minuten und 2 Stunden liegt.

15. Das Verfahren gemäß Anspruch 7, das weiter Folgendes umfasst:
das Unter-Druck-Setzen eines alkoholischen Lösungsmittels (205);
das Mischen des alkoholischen Lösungsmittels (205) mit dem Sc-CO₂ (206) vor dem Zuführen des Sc-CO₂ (206) zu dem Farbstoffgefäß (302) und dem Färbekessel (303) und
das Entfernen des alkoholischen Lösungsmittels (205) vom Sc-CO₂-gemischten Farbstoff (211) durch einen oder mehrere Zyklonabscheider (306).

16. Das Verfahren gemäß Anspruch 15,
wobei das alkoholische Lösungsmittel (205) gewählt ist aus der Gruppe bestehend aus Methanol, Ethanol und einer Kombination davon.

17. Das Verfahren gemäß Anspruch 15,
wobei der Farbstoff (203) ein dispergierter Reaktivfarbstoff ist.

18. Das Verfahren gemäß Anspruch 15, wobei das alkoholische Lösungsmittel (205) in einem Bereich von 3 Gewichtsprozent bis 12 Gewichtsprozent, bezogen auf das Sc-CO₂, vorliegt.

19. Das Verfahren gemäß Anspruch 15, wobei das alkoholische Lösungsmittel in einem Bereich von 0,1 Gewichtsprozent bis 5 Gewichtsprozent, bezogen auf das Sc-CO₂, vorliegt.

## Revendications

1. Système conçu pour la teinture de formes multiples de textiles à l'aide de dioxyde de carbone (CO₂) liquéfié, le système comprenant :
- une première pompe (301) de mise en pression pour comprimer du CO₂ liquéfié (202) et former du CO₂ supercritique, abrégé en Sc-CO₂ (206),
- un appareil de chauffage (309) pour chauffer le Sc-CO₂ (206),
- une cuve (302) de colorant pour mélanger un colorant (203) et le Sc-CO₂ (206) de manière à obtenir du colorant (211) mélangé à du Sc-CO₂,
- une cuve (303) de teinture pour teindre le textile en faisant circuler le Sc-CO₂ et le colorant (211) mélangé à du Sc-CO₂, entre la cuve (303) de teinture et la cuve (302) de colorant,
- un ou plusieurs séparateur(s) cyclone(s) (306) pour éliminer le colorant (203) du colorant (211) mélangé à du Sc-CO₂, de manière à récupérer du CO₂ liquéfié séparé (210),
- une deuxième pompe (308) de mise en pression pour comprimer du CO₂ (201) et former du CO₂ liquéfié (202),
- et une cuve (312) de stockage de CO₂ liquéfié, pour stocker le CO₂ liquéfié (202) et le CO₂ liquéfié séparé (210), provenant du ou des séparateur(s) cyclone(s) (306).

2. Système selon la revendication 1, comportant par ailleurs du CO₂ (202), un solvant alcoolique (205) et du colorant (203), et comprenant une troisième pompe (311) de mise en pression pour comprimer un solvant alcoolique (205), étant entendu que :
- le solvant alcoolique (205) est choisi dans l'ensemble constitué par du méthanol, de l'éthanol et une combinaison de ces deux composés,
- et le colorant (203) est un colorant plastosoluble apte à réagir.

3. Système selon la revendication 1, dans lequel la cuve (302) de colorant comprend un moteur (401), un panier perforé (405), une ou plusieurs pale(s) (407) d'agitateur et une enveloppe chauffante (408).

4. Système selon la revendication 1, dans lequel la cuve (303A) de teinture pour teindre un textile sous forme d'étoffe comporte une ensouple pour étoffe (502), une arrivée et une sortie permettant de faire circuler le Sc-CO₂, et une enveloppe chauffante (503).

5. Système selon la revendication 1, dans lequel la cuve (303B) de teinture pour teindre un textile sous forme de vêtement comporte un panier à vêtement (601), une cuve à vêtement (604), une enveloppe chauffante (602), une arrivée et une sortie permettant de faire circuler le Sc-CO₂, et un moteur (603).

6. Système selon la revendication 1, dans lequel la cuve (303C) de teinture pour teindre un textile sous forme de fil comporte une ensouple pour fil (801), une enveloppe chauffante (802), et une arrivée et une sortie permettant de faire circuler le Sc-CO₂ (803).

7. Procédé de teinture d'un textile à l'aide de dioxyde de carbone (CO₂) liquéfié, le procédé comportant les étapes suivantes :
- charger un textile dans une cuve (303, S101) de teinture,
- mettre du CO₂ liquéfié (202) sous pression et le chauffer de manière à former du CO₂ supercritique (206), abrégé en Sc-CO₂ (S102),
- mélanger un colorant (203) et le Sc-CO₂ (206) dans une cuve (302) de colorant, à une première température et sous une première pression, de manière à obtenir du colorant mélangé à du Sc-CO₂,
- faire circuler le Sc-CO₂ (206) et le colorant (211) mélangé à du Sc-CO₂ entre la cuve (303) de teinture et la cuve (302) de colorant, pendant une durée de teinture permettant de teindre le textile,
- rincer ensuite le textile en utilisant du Sc-CO₂ (206) à une deuxième température et sous la première pression, pendant une durée de rinçage (S104), la deuxième température étant inférieure à la première température,
- éliminer le colorant (203) du colorant mélangé à du Sc-CO₂, au moyen d'un ou de plusieurs séparateur(s) cyclone(s) (306) et récupérer du CO₂ liquéfié séparé (202),
- mettre du CO₂ (201) sous pression et former du CO₂ liquéfié (202),
- stocker le CO₂ liquéfié (202) dans une cuve (312) de stockage de CO₂ liquéfié,
- et stocker le CO₂ liquéfié séparé (210), provenant du ou des séparateur(s) cyclone(s) (306), dans ladite cuve (312) de stockage de CO₂ liquéfié.

8. Procédé selon la revendication 7, comprenant par ailleurs le fait de purifier le CO₂ liquéfié séparé (210) et transférer le CO₂ liquéfié séparé (210) dans une cuve (312) de stockage de CO₂ liquéfié, pour recyclage.

9. Procédé selon la revendication 7, dans lequel la circulation du Sc-CO₂ (206) et du colorant (211) mélangé à du Sc-CO₂ entre la cuve (303) de teinture et la cuve (302) de colorant est menée par une pompe (103) de circulation fonctionnant en sens unique ou dans un sens puis dans l'autre.

10. Procédé selon la revendication 7, dans lequel la première température est comprise dans l'intervalle allant de 60 °C à 150 °C.

11. Procédé selon la revendication 7, dans lequel la première pression est comprise dans l'intervalle allant de 140 bar à 280 bar.

12. Procédé selon la revendication 7, dans lequel la deuxième température est comprise dans l'intervalle allant de 40 °C à 80 °C.

13. Procédé selon la revendication 7, dans lequel la durée de teinture est comprise dans l'intervalle allant de 30 minutes à 6 heures.

14. Procédé selon la revendication 7, dans lequel la durée de rinçage est comprise dans l'intervalle allant de 10 minutes à 2 heures.

15. Procédé selon la revendication 7, qui comporte par ailleurs les opérations suivantes :
- mettre un solvant alcoolique (205) sous pression,
- mélanger le solvant alcoolique (205) avec le Sc-CO₂ (206) avant d'envoyer le Sc-CO₂ (206) dans la cuve (302) de colorant et la cuve (303) de teinture,
- et éliminer le solvant alcoolique (205) du colorant (211) mélangé à du Sc-CO₂, au moyen d'un ou de plusieurs séparateur(s) cyclones (306).

16. Procédé selon la revendication 15, dans lequel le solvant alcoolique (205) est choisi dans l'ensemble constitué par du méthanol, de l'éthanol et une combinaison de ces deux composés.

17. Procédé selon la revendication 15, dans lequel le colorant (203) est un colorant plastosoluble apte à réagir.

18. Procédé selon la revendication 15, dans lequel le solvant alcoolique (205) se trouve en une proportion, rapportée au Sc-CO₂, comprise dans l'intervalle allant de 3 % en poids à 12 % en poids.

19. Procédé selon la revendication 15, dans lequel le solvant alcoolique (205) se trouve en une proportion, rapportée au Sc-CO₂, comprise dans l'intervalle allant de 0,1 % en poids à 5 % en poids.
